# EUROPEAN PATENT APPLICATION

(11) **EP 1 533 097 A1**
(43) Date of publication of application: **25.05.2005**
(21) Application number: 03388073.3
(22) Date of filing: 11.11.2003
(51) Int. Cl.: B29C 45/27, B29C 45/14

(54) **An injection mould for in-mould decoration and plastic article obtained using the mould**

(71) Applicant: Sony Ericsson Mobile Communications AB, 221 88 Lund (SE)
(72) Inventor: Wedel, Martin, 212 16 Malmö (SE)
(74) Representative: Andersen, Poul Hoeg

(57) **Abstract**

An injection mould for in-mould decoration of a plate-shaped plastics article (11) with a substantially uniform thickness. The injection mould comprises at least two mould parts forming a cavity with a width corresponding to the thickness (T) of the plate-shaped plastics article (11). One of the mould parts (3) is provided with a sprue opening (7) facing the cavity of the injection mould, and a recess (8) is provided in the mould part (3) around the sprue opening (7). The recess (8) comprises a plurality of notches (9) that extend radially outwards from the sprue opening (7). Also a plate-shaped injection moulded plastics article (11) provided with a decoration on a front side thereof and with a slightly elevated portion (13) at a rear side (14) thereof. The elevated portion (13) comprises a central area (15) and ridges (16) extending radially from the central area (15).

## Description

### Technical field

The invention relates to an injection mould for in-mould decoration of a plate-shaped plastics article with a substantially uniform thickness, which injection mould comprises at least two mould parts forming a cavity with a width corresponding to the thickness of the plate-shaped plastics article, one of the mould parts being provided with a sprue opening facing the cavity of the injection mould, a recess being provided in the mould part around the sprue opening. The invention also relates to a plate-shaped injection moulded plastics article provided with a decoration on a front side thereof and with a slightly elevated portion at a rear side thereof.

### Related prior art

Injected plastics articles provided with text matter or images may be manufactured in different ways. The present invention is related to the method where the text or image is printed on a foil, which is subsequently positioned between two mould parts of an injection mould with the printed matter facing the cavity of the mould. The mould is then closed, and molten plastics material is under pressure injected through a sprue into the cavity of the mould. The molten plastics material is then allowed to cool. The printed matter adheres to the cooled plastics material whereas the foil does not. Therefore, when the article is removed from the mould the printed matter has been transferred from the foil to the surface of the injection moulded article.

The molten plastics material is injected into the cavity of the mould under high pressure, and when the article to be produced is plate-shaped, i.e. has a relatively small thickness, the sprue opening is typically located close to the foil in the mould. This entails a risk of destroying or at least distorting the printed matter due to the high pressure and high speed of the molten plastics material at this area.

US-A-4 917 927 discloses a method in which this risk is reduced by introducing the molten plastics material into the cavity along the foil and not perpendicular to the foil.

Another way of reducing the risk of distorting the printed matter in an in-mould decorating process is disclosed in US-A-5 264 172. The injection mould described in this reference is provided with a plurality of sprue openings or gates that are arranged in such manner that each gate does not supply molten plastics material to an area greater than two square inches (appr. 12.9 cm²). Thereby it should be possible to reduce the process heat and pressures and still inject directly on the foil.

Yet another way of reducing the risk of distorting the printed matter on the foil is to provide a recess around the sprue opening in the mould part provided with the sprue. Thereby the pressure of the injected plastics material is reduced just before the molten plastics material enters the cavity of the mould. The recess is typically dome-shaped. Of course, the recess results in a plastics article that is provided with an elevated area. In most cases this is acceptable since it is located on a rear side of the article. However, if the plastics article is plate-shaped the locally increased thickness causes sink marks to be created on the front side of the article due to shrinkage of the plastics material when it cools down. This is highly undesirable.

### Object of the invention

Since the last-mentioned manner of preventing distortion of the printed matter during the injection of molten plastics material is preferred due to its simplicity, it is desired to further develop this method in a way that does not result in the creation of sink mark.

It is therefore an object of the invention to provide an injection mould provided with a recess around the sprue opening by which it is possible to manufacture a plate-shaped plastics article that does not show any sink marks on the front side. It is also an object of the invention to provide a plastics article with printed matter that does not disclose any sink marks or distorted printed matter.

### Summary of the invention

The object of the invention is achieved by configuring the recess around the sprue in the mould part to comprise a plurality of notches that extend radially outwards from the sprue opening.

The speed and pressure of the molten plastics material that is injected into the cavity of the injection mould is thereby still reduced just before it enters the cavity and the risk of distorting the printed matter is low. However, since the injection moulded plastics article is not provided with any general local increased thickness, but rather with ridges protruding from a central area at the rear side of the plastics article the risk of sink mark creation is considerably reduced.

In a preferred embodiment the recess generally has a flattened dome shape which ensures a smooth transition between the general thickness of the plastics article and the area with increased material thickness.

In order to minimise the risk of sink mark creation the diameter of the sprue opening and a width of each notch correspond substantially to the width of the cavity.

The recess preferably comprises four notches provided at intervals of 90°.

The object is also achieved by arranging the elevated area at the rear side of the plate-shaped plastics article in the form of a central area and ridges extending radially from the central area.

Again, since the injection moulded plastics article is not provided with any general local increased thickness, but rather with ridges protruding from a central area at the rear side of the plastics article the risk of sink mark creation is considerably reduced.

The elevated portion generally has a flattened dome shape which ensures a smooth transition between the general thickness of the plastics article and the area with increased material thickness.

In order to minimise the risk of sink mark creation the diameter of the central area and a width of each ridge substantially correspond to a thickness of the plastics article.

Preferably, the elevated portion comprises four ridges arranged at intervals of 90°.

It shall be emphasised that the term "comprise/comprising" when used in this specification is taken to specify the presence of stated features, integers, steps or components but does not preclude the presence or addition of one or more other features, integers, steps components or groups thereof.

### Description of the drawings

The invention will be described in detail in the following with reference to the drawings in which
Fig. 1 shows a cross-section through an open injection mould with a decorating foil;
Fig. 2 shows a cross-section through the injection mould shown in Fig. 1 in a closed state;
Fig. 3 shows a cross-section through the injection mould shown in Figs 1-2 in a closed state with injected plastics material;
Fig. 4 shows a perspective view of the sprue opening in one of the mould part shown in Figs 1-3;
Fig. 5 shows a perspective view of an injected moulded plastics article in accordance with the invention;
Fig. 6 shows a cross-section through the plastics article shown in Fig. 5; and
Fig. 7 shows a cross-section through a plastics article according to the prior art.

### Detailed description of an embodiment of the invention

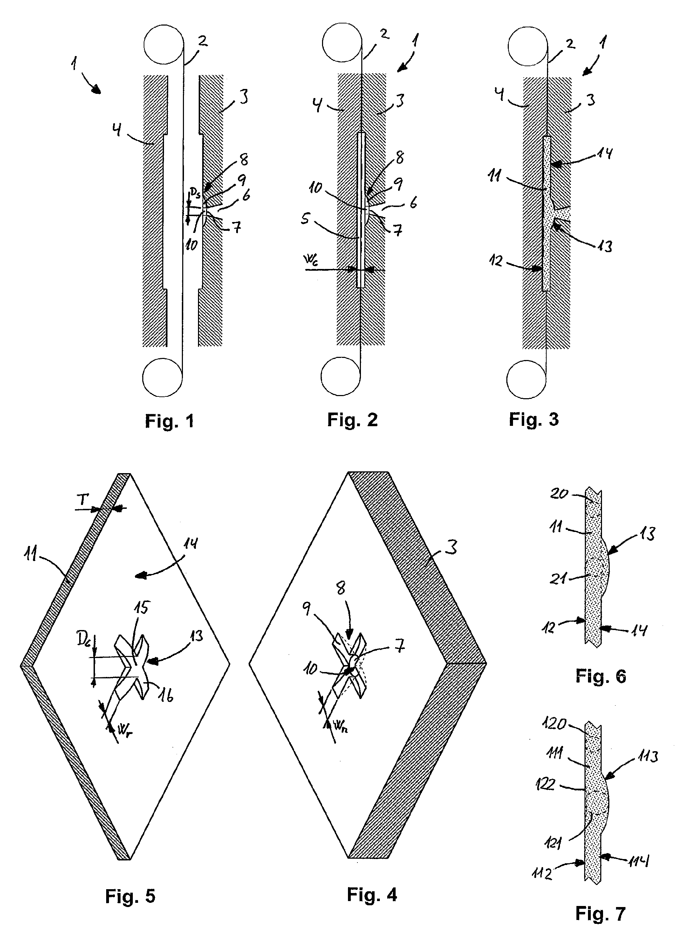

Fig. 1 and 2 show a cross-section through an injection mould 1 with a decorating foil 2 extending through the injection mould 1 between two mould parts 3,4. Fig. 1 shows the injection mould 1 in an open position and Fig. 2 shows the injection mould 1 in a closed position. The two mould parts 3,4 form a cavity 5 with a general width W_{c} when the injection mould 1 is closed as shown in Fig. 2.

A sprue 6 for injecting molten plastics material into the cavity 5 is provided in one mould part 3. The sprue 6 has a sprue opening 7 with a diameter Dₛ at the entrance to the cavity 5. A recess 8 is provided around the sprue opening 7 in order to reduce the speed and pressure of the injected molten plastics material. The recess 8 generally has a flattened dome shape with four notches 9 arranged in intervals of 90°. Each of the notches 9 has a width Wₙ that essentially corresponds to the width W_{c} of the cavity 5. This configuration is shown more clearly in Fig. 4 that shows a perspective view of the sprue opening 7 with the recess 8 comprising the notches 9. Generally, the recess 8 comprises a central area 10 with the notches 9 extending radially outwards from the central area 10.

Fig. 3 shows a cross-section through the injection mould 1 shown in Figs 1-2 in a closed state with molten plastics material injected into the cavity 5 forming a plastics article 11 provided with a decoration on a front side 12 thereof. It is seen how the recess 8 creates an elevated portion 13 at the rear side 14 of the plastics article 11.

The elevated and generally dome-shaped portion 13 is shown in perspective view in Fig. 5. It can be seen that it comprises a central area 15 and four ridges 16 that extend radially from the central area 15. The four ridges 16 are arranged at right angles in relation to each other, i.e. at intervals of 90°. The general diameter D_{c} of the central area 15 and the width Wᵣ of the ridges 16 are preferably arranged to substantially correspond to the width of the plastics article 11. Therefore, since the injection moulded plastics article 11 is not provided with any general locally increased thickness, but rather with ridges 16 protruding from a central area 15 at the rear side 14 of the plastics article 11 the risk of sink mark creation is considerably reduced.

This may also be illustrated as shown in Figs 6 and 7, where Fig. 6 shows a cross-section through the plastics article 11 according to the invention and Fig. 7 shows a cross-section through a plastics article 111 according to the prior art.

Generally, sink marks are created on thin-walled injection moulded plastics articles at areas with locally increased thickness. In the prior art articles provided with a fully dome-shaped, locally increased thickness it is almost certain that more or less visible sink marks are created. This is illustrated in Fig. 7, where the general thickness of the plastics article 111 is symbolised by the dotted circle 120 that indicates the largest size of a sphere located fully within the plastics article 111. As shown, at the area with locally increased thickness, i.e. at the area with the fully dome-shaped elevated portion 113 at the rear side 114, a substantially larger sphere 121 can be located. Since the plastics material shrinks to some degree when it solidifies a sink mark 122 (indicated by a dotted line) will be created on the front side 112 of the plastics article 111.

A cross-section through a plastics article 11 according to the present invention is shown in Fig. 6, and it is seen that the general thickness of the plastics article may contain a sphere 20 of the same size as the sphere 120 in the prior art plastics article 111. However, at the area of the elevated portion 13 a sphere 21 that is only slightly larger than the sphere 20 can be located, since the elevated portion is not fully dome-shaped. Therefore, the shrinkage of the plastics material at this area is substantially smaller than the shrinkage at the same area of the prior art plastics article.

The invention has been described with reference to a preferred embodiment featuring four notches/ridges that extend radially from a central area. However, more or less than four notches/ridges may be provided, i.e. the number of notches/ridges may be from 2 to e.g. 10. The important feature is that the pressure of the molten plastics material is reduced when it enters the cavity of the injection mould such that the printed matter is not distorted, and that the basis for sink mark creation is reduced to a minimum or even eliminated.

## Claims

1. An injection mould (1) for in-mould decoration of a plate-shaped plastics article (11) with a substantially uniform thickness, which injection mould (1) comprises at least two mould parts (3,4) forming a cavity (5) with a width (W_{c}) corresponding to the thickness (T) of the plate-shaped plastics article (11), one of the mould parts (3) being provided with a sprue opening (7) facing the cavity (5) of the injection mould (1), a recess (8) being provided in the mould part (3) around the sprue opening (7), **characterised in that** the recess (8) comprises a plurality of notches (9) extending radially outwards from the sprue opening (7).

2. An injection mould according to claim 1, **characterised in that** the recess (8) generally has a flattened dome shape.

3. An injection mould according to claim 1 or 2, **characterised in that** a diameter (Dₛ) of the sprue opening (7) and a width (Wₙ) of each notch (9) substantially correspond to the width (W_{c}) of the cavity (5).

4. An injection mould according to any one of claims 1-3, **characterised in that** the recess (8) comprises four notches (9) provided at intervals of 90°.

5. A plate-shaped injection moulded plastics article (11) provided with a decoration on a front side (12) thereof and with a slightly elevated portion (13) at a rear side (14) thereof, **characterised in that** the elevated portion (13) comprises a central area (15) and ridges (16) extending radially from the central area (15).

6. A plastics article according to claim 5, **characterised in that** the elevated portion (13) generally has a flattened dome shape.

7. A plastics article according to claim 5 or 6, **characterised in that** a diameter (D_{c}) of the central area (15) and a width of each ridge (Wᵣ) substantially correspond to a thickness (T) of the plastics article (11).

8. A plastics article according to any one of claims 5-7, **characterised in that** the elevated portion (13) comprises four ridges (16) arranged in intervals of 90°.
